# FASCICULE DE BREVET EUROPEEN

(11) **EP 3 158 132 B1**
(45) Date de publication et mention de la délivrance du brevet: **30.12.2020**
(21) Numéro de dépôt: 15736634.5
(22) Date de dépôt: 16.06.2015
(51) Int. Cl.: G10K 9/22, G10K 11/00, G08G 1/01, G08G 1/02, G08G 1/14, E01F 11/00

(54) **BORNE DE DÉTECTION COMPRENANT UN TRANSDUCTEUR PIEZOELECTRIQUE FIXÉ À UNE MEMBRANE LIÉE À UNE STRUCTURE DE BUTÉE**
DETEKTIONSENDGERÄT MIT EINEM PIEZOELEKTRISCHEN WANDLER, DER AN EINER, MIT EINER STÜTZSTRUKTUR VERBUNDENEN MEMBRANE GESICHERT IST
DETECTION TERMINAL INCLUDING A PIEZOELECTRIC TRANSDUCER SECURED TO A DIAPHRAGM CONNECTED TO AN ABUTMENT STRUCTURE

(30) Priorité: 18.06.2014 FR 1401374
(43) Date de publication de la demande: 26.04.2017
(73) Titulaire: IEM SA, 1228 Plan-les-Ouates (CH)
(72) Inventeur: MENOUD, Edouard, 1228 Plan-les-Ouates (CH); DEMIERRE, Michel, 1623 Semsales (CH)
(74) Mandataire: Gaglione, Renaud
(86) Numéro de dépôt international: PCT/IB2015/054549
(87) Numéro de publication internationale: WO 2015/193812

(56) Documents cités:
- WO-A1-2006/005208
- WO-A1-2011/067609
- WO-A1-2012/032584
- DE-A1-102010 013 878
- US-A- 5 780 958
- US-A1- 2008 130 416
- US-A1- 2012 260 742

## Description

L'invention se rapporte à une borne de détection de véhicules en stationnement à des fins de surveillance du respect des droits de stationnement et/ »ou servant d'éléments de base utilisés par les dispositifs de guidage des véhicules.

Depuis quelques années déjà, sont apparues sur le marché, des bornes de détection de véhicules autonomes et encastrées dans la chaussée, elles transmettent l'information d'occupation par radio vers un dispositif gestionnaire. Initialement ces bornes utilisaient les variations du champ magnétique terrestre engendrées par les véhicules comme critère de détection. Toutefois cette technologie est limitée en fiabilité, elle est de l'ordre de 95% lorsque les places de stationnement sont en épis ou qu'il y a présence de gros véhicules comme les bus ou camions à proximité de la place de stationnement surveillée et devient hautement aléatoire lorsque la borne se trouve aux abords de lignes de tram, de métro ou d'alimentation électrique.

Afin de palier ces inconvénients, les constructeurs ont imaginé remplacer ou compléter la détection magnétique avec un deuxième critère généralement basé sur une mesure optique ou sonique. Le document WO06005208 présente un détecteur permettant de détecter la présence de véhicule en utilisant une deuxième technologie complémentaire basée sur un télémètre à laser infrarouge ou à ondes ultrasoniques.

Ainsi, muni de ce type de détection, la fiabilité dépasse les 99% lorsque le détecteur n'est pas perturbé par de l'eau ou de la neige.

Judicieusement, la combinaison de la technologie magnétique avec la technologie optique ou sonique permet d'assurer un taux de fiabilité de plus de 99% par temps sec et de l'ordre de 95% lorsqu'il y a un élément perturbateur comme la neige.

La technologie magnétique permet d'enfouir le détecteur dans la chaussée alors que l'usage des technologies optique ou sonique implique qu'une partie sensible du détecteur servant d'interface entre la partie enterrée du détecteur et l'air puisse émettre des rayons optiques ou acoustiques en direction du véhicule à détecter et recevoir des rayons réfléchis. Cette partie sensible peut-être une ou plusieurs petites vitres pour les détecteurs optiques ou une ou plusieurs surfaces ou membranes vibrantes pour les détecteurs soniques. Le document DE 199 37 195 divulgue un moyen de détection comprenant un transducteur piézoélectrique émettant et recevant des ondes ultrasonores par l'intermédiaire d'une membrane à laquelle il est fixé, ladite membrane étant disposée en regard d'une ouverture d'un boîtier et liée audit boîtier par des moyens de liaison. Le moyen de détection connu de ce document est destiné à être installé dans le parechoc d'un véhicule.

Le document WO 2011/051040 divulgue un moyen de détection du même type, comprenant en outre une structure d'atténuation formée d'une matière d'enrobage dans laquelle est noyé le transducteur piézo-électrique. Un espace est ménagé entre la structure atténuation et un fond du boîtier, opposé à l'ouverture.

Dans l'un et l'autre cas, le moyen de détection n'est pas adapté à une borne de détection, qui est soumise à de rudes contraintes lors du passage des roues de véhicules mais aussi lorsqu'il s'agit de la lame d'un chasse neige en particulier dans les zones où le stationnement est alterné journellement d'un côté ou de l'autre de la chaussée afin de permettre le déblayage la neige.

Le document WO 2012/032584 divulgue un moyen de détection comprenant un transducteur piézo-électrique fixé à une membrane disposée en regard d'une ouverture d'un logement ménagé dans un boîtier. La membrane est liée au boîtier par des moyens de liaison qui comprennent des pattes flexibles et une structure ayant une forme cylindrique fermée à une extrémité, opposée à la membrane et en butée permanente contre les pattes flexibles. Le transducteur piézo-électrique occupe l'espace entre l'extrémité fermée de la structure et la membrane. La structure, le transducteur piézo-électrique et la membrane sont pressés par les pattes flexibles contre une surface du boîtier, opposée à l'ouverture du logement ménagé dans ce boîtier.

L'apport de l'invention consiste à introduire un moyen de retrait afin de permettre le passage de roues de véhicules ou de lame de chasse neige.

A cet effet, l'invention a pour objet une borne de détection selon la revendication 1.

La position en butée de la structure permet de limiter la déformation des moyens de liaison à ce qui est nécessaire pour le retrait de la membrane. Dans cette position rétractée, la pression exercée sur la membrane est reprise par le boîtier. Le transducteur piézoélectrique est ainsi protégé par le passage d'un véhicule sur la borne de détection, sans qu'il soit nécessaire de former des surélévations dans le boîtier.

Selon un premier mode de réalisation, la structure est de forme tubulaire tandis que les moyens de liaison comprennent un joint élastomère.

Selon un deuxième mode de réalisation, la structure est de forme tubulaire tandis que les moyens de liaison comprennent une jupe qui forme une seule pièce avec la membrane..

Selon un troisième mode de réalisation, les moyens de liaison comprennent une jupe qui forme une seule pièce avec la membrane tandis que la structure comprend une nervure formée dans une épaisseur de la jupe par un premier et un deuxième amincissement de matière.

La surface sensible, c'est-à-dire la membrane à laquelle est fixé le transducteur piézoélectrique, est avantageusement située au niveau du sol ou à fleur de la chaussée ou de la place de stationnement, et s'enfonce, c'est-à-dire prend la position rétractée, lorsqu'une pression engendrée par un pneu ou un balai est présente, ceci de manière à protéger la dite surface.

Avantageusement, la structure et le boîtier sont pourvus de moyens réciproques les bloquant en rotation l'un par rapport à l'autre. Ainsi, la borne de détection résistera aussi aux efforts de rotation d'une roue située au-dessus, la dite roue pouvant être l'objet d'une action puissante et malveillante de la part d'un conducteur utilisant la direction assistée de son véhicule pour détruire le détecteur.

Le procédé de mesure mis en oeuvre est celui d'un télémètre ultrasonique mesurant la distance au point le plus proche contenu dans un cône d'observation.

Les figures ci-dessous représentent, à titre non limitatif, quelques modes de réalisation.
La fig. 1 présente une borne de détection à fleur du sol selon le premier mode de réalisation.
La fig. 2 montre la borne de détection de la figure 1 soumise à la pression d'un pneumatique de véhicule.
La fig. 3 montre en perspective le support de la membrane de la borne de détection illustrée par les figures précédentes.
La fig. 4 montre une borne de détection à fleur du sol selon le deuxième mode de réalisation.
La fig. 5 montre la borne de détection de la figure 4 soumise à la pression d'une lame de chasse-neige.
La fig. 6 montre une borne de détection à fleur du sol selon le troisième mode de réalisation.
La fig. 7 montre la borne de détection de la figure 6 soumise à la pression d'un pneumatique de véhicule.
La fig. 8 présente l'effet des flexions ultrasoniques sur la structure du premier mode de réalisation.
La fig. 9 présente une borne de détection bi-senseur complète selon le premier mode de réalisation.
La fig. 10 présente une coupe de la borne bi-senseur selon le premier mode de réalisation.
La fig. 11 présente le schéma électrique d'une borne bi-senseur.
La fig. 12 présente le schéma électrique d'une borne mono-senseur.
La Fig. 13 présente les signaux électriques pertinents d'une borne.

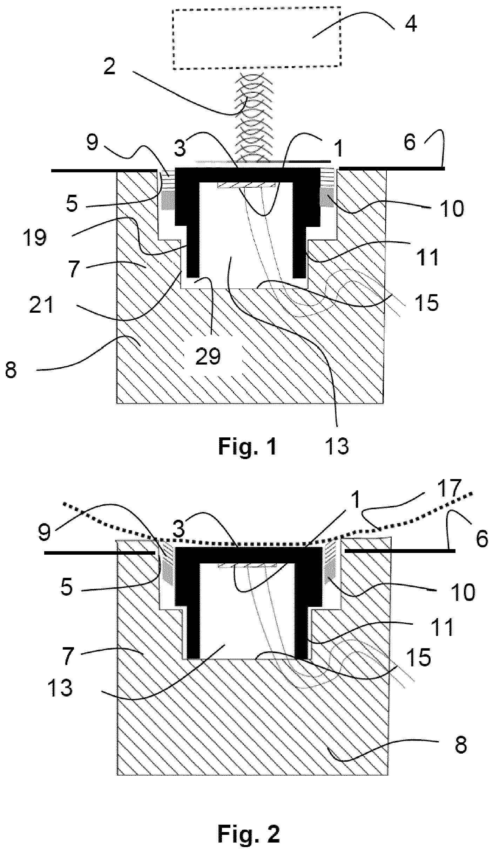

Une borne de détection selon le premier mode de réalisation comprend, fig. 1, un transducteur piézoélectrique 1 émettant et recevant des ondes ultrasonores 2 par l'intermédiaire d'une membrane 3 à laquelle il est fixé, par exemple par collage. Ladite membrane 3 est reçue dans une ouverture 5 d'un boîtier extérieur 7 enfoui dans le sol 8. Dans cet agencement, la membrane 3 est au niveau de la surface 6 du sol.

Le boîtier 7 loge différents composants électroniques, non représentés, comme un microprocesseur, un éventuel capteur magnétique, une batterie et une antenne radio.

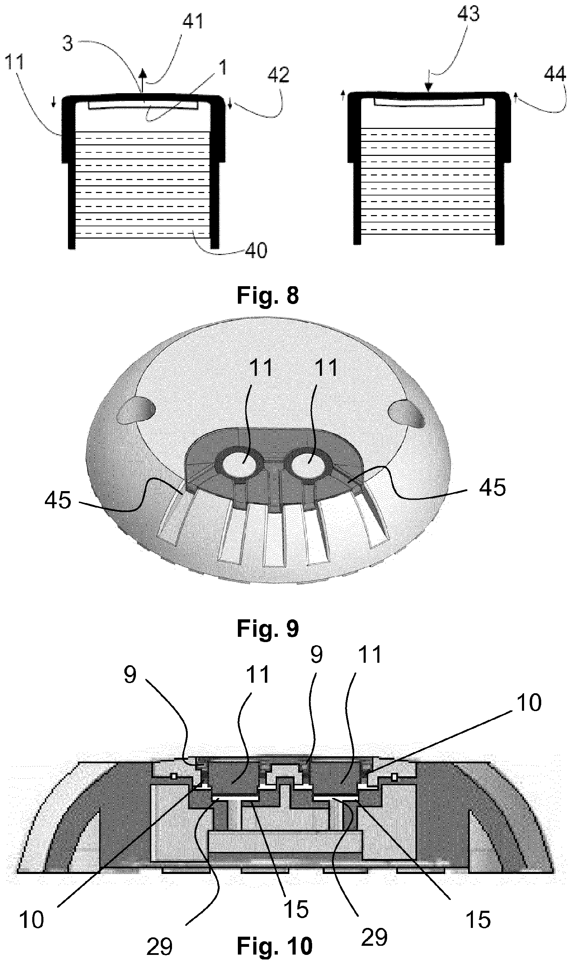

La figure 8 présente de manière exagérée, le mécanisme de formation puis de réception des ondes ultrasoniques. On y voit le transducteur piézoélectrique et sa membrane 3 fixée (collée) sur la structure 11. La fig. de gauche présente la membrane en flexion positive c'est-à-dire avec une élévation du centre 41, élévation qui est reportée sur le dessus de la structure 41. Par effet de contre réaction (loi des quantités de mouvement), les parois latérales subissent un micromouvement vertical vers le bas 42. Sur la fig. de gauche, on y voit la phase inverse soit la flexion négative de la membrane engendrant un abaissement du dessus de la structure 43 et son effet compensatoire qui est un micromouvement vertical vers le haut des parois de la structure 44. Lors de l'émission des sons, les mouvements générés par l'élément piézoélectrique et reportés sur la structure sont de l'ordre du micromètre alors qu'ils sont de deux à trois ordres de grandeur inférieurs lors de la réception. L'intérieur de la structure est rempli d'une mousse isophonique « isolant phonique » de manière à bloquer des réflexions pouvant provenir de l'arrière de la structure liée au boîtier 7 par un joint élastomère 9 et liée à une structure 11. Ledit joint 9 a une forme annulaire et est collé au boîtier 7 par un cordon de colle 10. La structure 11 a une forme tubulaire et est insérée dans un logement 13 du boîtier 7 également cylindrique. Ledit logement 13 s'étend entre l'ouverture 5 et un fond opposé 15. La structure 11 tubulaire s'étend dans le logement 13 à moins d'une fraction de millimètre au-dessus du fond 15. La membrane 3 et la structure 11 tubulaire peuvent former une seule pièce.

En fonctionnement, la membrane 3 forme une surface oscillante excitée par le transducteur piézoélectrique 1. L'ensemble est adapté en impédance avec la structure 11. Le train d'ondes ultrasonores 2 est envoyé sur une cible 4, par exemple le carter d'un véhicule, et réfléchi en direction de la membrane 3. Cette technique permet une saisie large, de forme conique. Elle permet aussi de déterminer la distance entre le sol et la cible.

Comme illustré par la figure 2, le joint élastomère 9 permet à la membrane 3 d'accuser un retrait lorsqu'elle est soumise à une pression, par exemple d'un pneumatique 17 de véhicule en train de rouler sur la borne de détection. Le retrait est déterminé par la position de la structure 11 pour laquelle elle est en butée contre le fond 15 du logement 13 formé dans le boîtier 7. A cet effet, la structure 11 présente un espace 29 de l'ordre de quelques dixièmes de millimètres par rapport au fond 15 du logement 13.

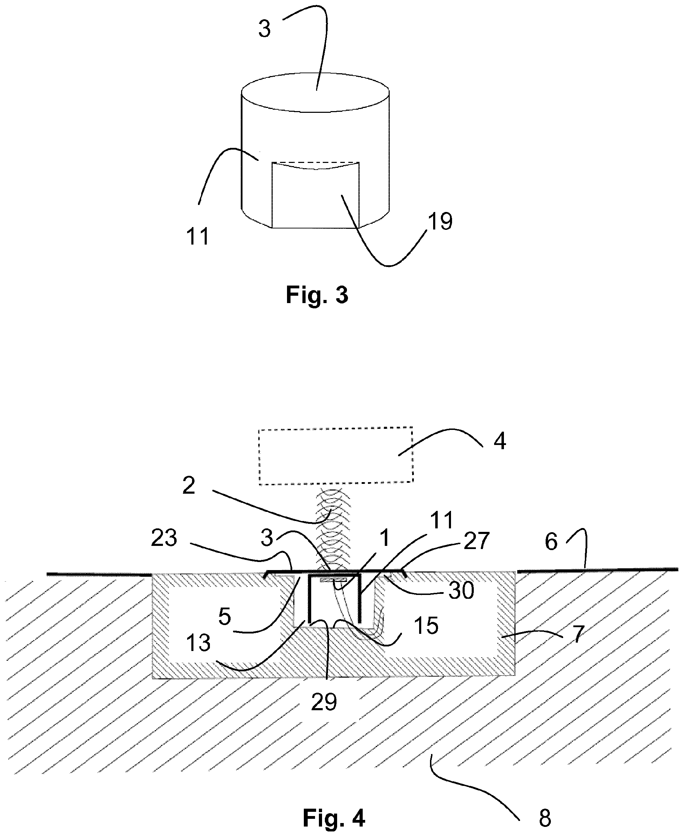

Figures 1 et 3, la structure 11 et le logement 13 présentent un méplat 19, 21 les bloquant en rotation l'un par rapport à l'autre. Cet agencement offre une meilleure protection du transducteur piézoélectrique 1 et du joint élastomère 9 contre une action malveillante d'un automobiliste qui utiliserait la direction assistée de son véhicule pour chercher à détruire la borne de détection.

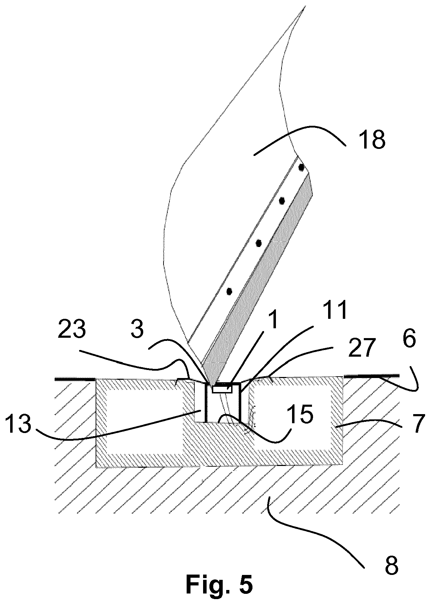

Dans l'exemple de réalisation illustré par les figures 4 et 5, la borne de détection est également à fleur du sol 6. Le transducteur piézoélectrique 1 est fixé à la membrane 3, laquelle est liée à la structure 11 par une liaison présentant une caractéristique isophonique « isolant phonique » favorable aux micromouvements phoniques verticaux. Les moyens de liaison comprennent une jupe 23 qui forme avec la membrane 3 une seule pièce, qui peut être métallique. Ladite pièce referme l'ouverture 5 du logement 13 en étant fixée au boîtier par des points de fixation 27.

Un espace 30 de l'ordre du dixième de millimètre permet à la jupe 23 et à la membrane 3 de vibrer lors des émissions et réceptions ultrasoniques. La structure 11 transfère au boîtier 7 la pression qui s'exerce sur la membrane 3 lorsqu'un véhicule roule sur la borne de détection. Là également, la structure 11 présente un espace de l'ordre de quelques dixièmes de millimètres par rapport au fond 15 du logement 13.

La figure 5 montre le retrait de la membrane 3 dans l'ouverture 5 du boîtier 7, lorsqu'elle est soumise à la pression d'une lame de chasse-neige 18. La structure 11 est dans la position en butée contre le fond 15 du logement 13.

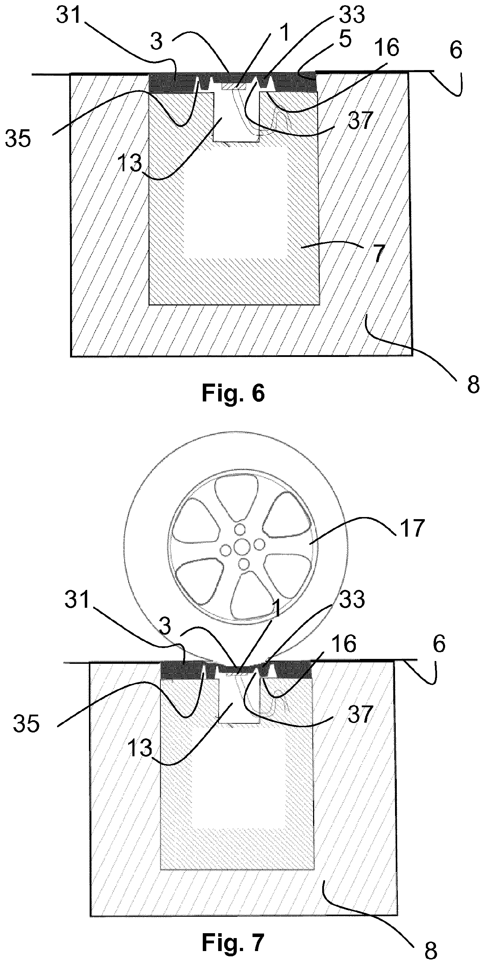

Dans l'exemple de réalisation illustré par les figures 6 et 7, la borne de détection est encore à fleur du sol 6. Les moyens de liaison comprennent une jupe 31 qui forme une seule pièce avec la membrane 3 agencée de manière à isoler les micromouvements verticaux, tandis que la structure 11 comprend une nervure 33 formée dans l'épaisseur de la jupe par un premier 35 et un deuxième 37 amincissement de matière. Lesdits amincissements ou entailles permettent de fixer précisément les zones vibrantes par rapport aux fixes et ainsi de bien maîtriser l'impédance mécanique de la membrane vibrante 3.

Figure 6, là encore, la structure 33 présente un espace de l'ordre de quelques dixièmes de millimètres par rapport à la surface 16 du logement 13.

La figure 7 montre le retrait de la membrane 3 dans l'ouverture 5 du boîtier 7, lorsqu'elle est soumise à la pression d'un pneumatique 17. La structure 11 est dans la position en butée contre la surface 16 du logement 13.

Les figures 9 à 13 présentent, de manière plus détaillées, un mode de réalisation de borne hors-sol.

La fig. 9 présente une borne hors-sol de 18 cm de diamètre et 2.5 cm de hauteur avec deux capteurs ultrasoniques intégrés dans des structures encastrées dans le profil de la borne et positionnés de manière légèrement oblique afin de faciliter l'évacuation de l'eau. On y voit aussi des rainures 45 ayant pour but de faciliter l'évacuation de l'eau tout en soulageant les structures 11 d'une partie de la charge résultant de la présence d'une roue sur la structure.

La fig. 10 présente une coupe au niveau des capteurs ultrasoniques de la borne présentée en fig. 9. Les structures 11 sont de 14 mm de diamètre et de 10 mm de hauteur. Elles sont fixées au boîtier par un premier joint 9 très souple (dureté inférieure à 20 Sh) de 2 mm d'épaisseur et d'une colle élastique de reprise de l'arrière 10 elle-même aussi très souple à base de MS-Polymère. Cet ensemble permet ainsi des micromouvements verticaux qui ne sont pas transmis au boîtier. Sur cette figure, on perçoit aussi l'espace 29 de l'ordre de quelques dixièmes de millimètres par rapport au fond 15 du logement.

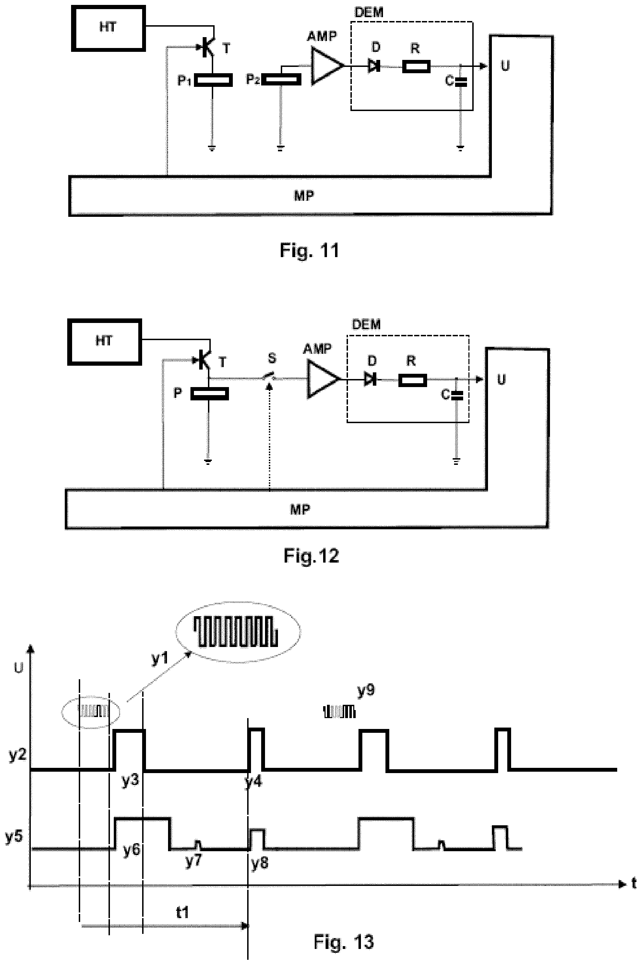

Les fig. 11 à 13 expliquent le fonctionnement de base de la détection ultrasonique dans le but de mettre en évidence la nécessité d'isoler phonétiquement le dispositif ultrasonique du boîtier. Le principe de la mesure consiste à envoyer périodiquement, sur l'élément piézoélectrique, un train d'impulsions comportant quelques cycles dont la fréquence correspond à la fréquence de résonnance de l'élément piézoélectrique. L'une des applications mises en service comporte des trains de 8 impulsions envoyés à la fréquence de 40 kHz. La deuxième partie du principe consiste à mesurer l'onde réfléchie puis à mesurer le temps qu'il y a entre l'émission du train puis l'arrivée de l'onde réfléchie, temps qui est proportionnel à la distance entre l'élément piézoélectrique et la cible.

Le montage de la fig. 11 présente un dispositif bi-senseurs. Il comporte un microprocesseur MP, une source de haute tension HT d'environ 100 V, un transistor T piloté par le microprocesseur et permettant d'envoyer le train d'ondes y1 sur l'élément piézoélectrique émetteur P1. Le retour de l'onde est perçu par l'élément piézoélectrique récepteur P2. Le signal est amplifié AMP puis est démodulé grâce à un démodulateur DEM composé des éléments D, R et C avant d'être envoyé sur une entrée analogique U du microprocesseur.

Le montage de la fig. 12 représente un dispositif mono-senseur. Il est similaire au montage bi-senseur avec la différence qu'il n'y a qu'un élément piézoélectrique P monté dans une structure similaire. Cet élément est utilisé pour émettre les impulsions puis il est commuté sur l'amplificateur au moyen du switch S dès la fin de l'émission. La différence entre les deux montages réside dans le fait qu'en double détection, il y a une amélioration de l'isolation phonique et qu'en conséquence la zone d'aveuglement est plus réduite. Cet aveuglement peut aussi être réduit d'un ordre de grandeur en travaillant à 400 kHz plutôt que 40 kHz, mais cela limite aussi la distance de mesure qui devient critique pour la détection des camions.

La fig. 13 présente le train d'ondes y1 envoyé périodiquement puis la réponse à la sortie du démodulateur U. Dans le premier cas y2, le capteur est fixé au boîtier au moyen d'un assemblage joint-colle adéquat. On y voit la zone d'aveuglement y3 puis après un temps t1 la réponse y4 liée à la réflexion de l'onde sur la cible. Dans le deuxième cas y5, le capteur est fixé au boîtier par un assemblage joint-colle traditionnel (dureté supérieure à 40 Sh). Ainsi on peut constater que la zone d'aveuglement y6 est plus grande et qu'il y a des amorces de réflexions internes ou réflexions fantômes y7 où l'onde émise traverse la zone joint-colle puis va buter sur les bords du boitier pour revenir vers le détecteur et finalement on y voit la réflexion recherchée y8 qui apparaît avec une amplitude plus faible puis le prochain départ du nouveau train d'ondes Y9.

## Revendications

1. Borne de détection comprenant un transducteur piézoélectrique (1) émettant et recevant des ondes ultrasonores (2) par l'intermédiaire d'une membrane (3) à laquelle il est fixé, ladite membrane (3) étant disposée en regard d'une ouverture (5) d'un logement (13) d'un boîtier (7), liée audit boîtier (7) par des moyens de liaison (9, 23, 31), ces moyens de liaison (9, 23, 31) étant isolants phoniques, et liée à une structure rigide (11, 33) insérée dans le logement (13), dans une position pour laquelle la structure rigide (11,33) présente un espace (29) par rapport à une surface (15,16) du logement (13), opposée à l'ouverture (5), **caractérisée en ce que** la structure rigide (11,33) permet à la membrane (3), lorsqu'elle est soumise à une pression, d'accuser un retrait dans l'ouverture (5) du boîtier (7), dans une position rétractée pour laquelle la structure rigide (11, 33) est en butée contre ladite surface (15, 16) du logement (13) du boîtier (7), en permettant au boîtier (7) de reprendre la pression exercée sur la membrane (3) pour protéger le transducteur piézoélectrique (1).

2. Borne de détection selon la revendication 1, **caractérisée en ce que** la structure rigide (11) est de forme tubulaire tandis que les moyens de liaison comprennent un joint élastomère isophonique (9).

3. Borne de détection selon la revendication 1, **caractérisée en ce que** la structure rigide (11) est de forme tubulaire tandis que les moyens de liaison comprennent une jupe (23) qui présente une liaison, avec le boîtier, isophonique aux ondes verticales et forme une seule pièce avec la membrane (3).

4. Borne de détection selon la revendication 2 ou 3, **caractérisée en ce que** la structure rigide (11) et le boîtier (7) sont pourvus de moyens réciproques (19, 21) les bloquant en rotation l'un par rapport à l'autre.

5. Borne de détection selon la revendication 1, **caractérisée en ce que** les moyens de liaison comprennent une jupe (31) qui forme une seule pièce avec la membrane (3) tandis que la structure rigide (11) comprend une nervure (33) formée dans une épaisseur de la jupe (31) par un premier (35) et un deuxième (37) amincissement de matière agencée de manière à créer une liaison, avec le boîtier, isophonique aux ondes verticales.

## Patentansprüche

1. Detektionsendgerät mit einem piezoelektrischen Wandler (1) zum Aussenden und Empfangen von Ultraschallwellen (2) mittels einer Membran (3), an der er befestigt ist, wobei die Membran (3) gegenüber einer Öffnung (5) eines Gehäuses (13) angeordnet ist, wobei das Gehäuse in einem Kasten (7) vorgesehen ist und die Membran (3) durch Verbindungsmittel (9, 23, 31) mit dem Kasten verbunden ist (7), wobei die Verbindungsmittel für Schalldämmung sorgen und die Membran (3) mit einer in dem Gehäuse (13) eingesetzten starren Struktur (11, 33) verbunden ist, in einer Position, in der die starre Struktur (11, 33) einen Raum (29) gegenüber einer der Öffnung (5) gegenüberliegenden Oberfläche (15, 16) des Gehäuses (13) aufweist, **dadurch gekennzeichnet, dass** die starre Struktur (11, 33) die Membran (3) bei Druckbeaufschlagung in die Öffnung (5) des Gehäuses (7) eintreten lässt, in einer eingefahrenen Position, für die die starre Struktur (11, 33) an der Oberfläche (15, 16) des in dem Kasten (7) vorgesehenen Gehäuses (13) anliegt, in der das Gehäuse (7) dem auf die Membran (3) ausgeübten Druck entgegenwirkt, um den piezoelektrischen Wandler (1) zu schützen.

2. Detektionsendgerät nach Anspruch 1, **dadurch gekennzeichnet, dass** die starre Struktur (11) rohrförmig ist und die Verbindungsmittel eine schallisolierende Elastomer Dichtung (9) umfassen.

3. Detektionsendgerät nach Anspruch 1, **dadurch gekennzeichnet, dass** die starre Struktur (11) rohrförmig ist und die Verbindungsmittel eine Schürze (23) umfassne, die mit der Membran ein einziges Teil bildet und mit dem Kasten verbunden ist, um eine Schalldämmerung zu vertikalen Wellen zu gewährleisten.

4. Detektionsendgerät nach Anspruch 2 oder 3, **dadurch gekennzeichnet, dass** die starre Struktur (11) und der Kasten (7) mit reziproken Mitteln (19, 21) vorgesehen sind, um sie gegeneinander in Rotation zu blockieren.

5. Detektionsendgerät nach Anspruch 1, **dadurch gekennzeichnet, dass** die Verbindungsmittel eine Schürze (31) umfassen, die mit der Membran ein einziges Teil bildet, und die starre Struktur (11) eine Rippe (33) umfasst, die in einer Dicke der Schürze (31) mit einer ersten (35) und einer zweiten (37) Ausdünnung von Material vorgesehen und mit dem Kasten verbunden ist, um eine Schalldämmerung zu vertikalen Wellen zu gewährleisten.

## Claims

1. Detection terminal comprising a piezoelectric transducer (1) emitting and receiving ultrasonic waves (2) via a membrane (3) to which it is attached, said membrane (3) is arranged opposite an opening (5) of a housing (13) provided in a box (7), connected to said box (7) by connecting means (9, 23, 31), said connecting means providing for sound insulation, and connected to a rigid structure (11, 33) inserted into the housing (13), in a position for which the rigid structure (11, 33) has a space (29) with respect to a surface (15, 16) of the housing (13), opposite the opening (5), **characterised in that** the rigid structure (11, 33) allows the membrane (3), when subjected to pressure, to retract through the opening (5) in the housing (7), in a retracted position for which the rigid structure (11, 33) abuts against said surface (15,16) of the housing (13) provided in the box (7), by allowing the housing (7) to oppose the pressure exerted on the membrane (3) to protect the piezoelectric transducer (1).

2. Detection terminal according to claim 1, **characterised in that** the rigid structure (11) is tubular, while the connecting means comprise an sound-insulation elastomer seal (9).

3. Detection terminal according to claim 1, **characterised in that** the rigid structure (11) is tubular while the connecting means comprise a skirt (23) which is integral with the diaphragm (3) and connected to the box to provide for sound-insulation to vertical waves.

4. Detection terminal according to claim 2 or 3, **characterised in that** the rigid structure (11) and the box (7) are provided with reciprocal means (19, 21) blocking them in rotation with respect to each other.

5. Detection terminal according to claim 1, **characterised in that** the connecting means comprise a skirt (31) integral with the diaphragm (3) while the rigid structure (11) comprises a rib (33) arranged in a thickness of the skirt (31) by means of a first (35) and a second (37) thinning of material and connected to the box to provide for sound-insulation to vertical waves.
